# EUROPEAN PATENT APPLICATION

(11) **EP 2 683 182 A1**
(43) Date of publication of application: **08.01.2014**
(21) Application number: 12175272.9
(22) Date of filing: 06.07.2012
(51) Int. Cl.: H04W 4/08, H04W 4/20

(54) **System and method for providing application feedback**

(71) Applicant: BlackBerry Limited, Waterloo, ON N2K 0A7 (CA)
(72) Inventor: Jagernauth, Terry, Waterloo, Ontario N2L 3W8 (CA)
(74) Representative: Moore, Barry

(57) **Abstract**

A system and method of providing application feedback on a client device is provided. The method comprises determining a group application feedback for an application, the group application feedback generated from feedback submitted by at least one other member of a group in which a device user of the client device is a member; and displaying the group application feedback on the client device. A system and method are also provided for providing application feedback. The method comprises detecting selection of an option to send a recommendation for an application; enabling selection of at least one contact; incorporating application feedback related to a group associated with at least one selected contact; and sending the recommendation and the application feedback to the at least one selected contact.

## Description

### TECHNICAL FIELD

The following relates to systems and methods for providing application feedback.

### DESCRIPTION OF THE RELATED ART

Electronic devices, particularly mobile electronic devices such as smart phones, tablet computers, portable gaming devices and the like, may have access to application services for downloading applications to the respective devices. Typically the application services host a server or other repository of applications and provide a user interface using a client application to enable users to browse, purchase (if necessary), and download the available applications. The application service may also provide the ability to provide feedback about an application by rating the applications, writing reviews of the applications. The application service may also provide the ability to receive upgrades for already installed applications through the client application.

Despite having the ability to browse through available applications and read reviews and ratings for particular applications, it can be time consuming and cumbersome to search through the often thousands of applications, even when the applications have been categorized. Since thousands and even millions of users may have access to the application service and can rate and write reviews for any of the applications they obtain, the relevance of the ratings and reviews may be lessened with the more users that submit their opinion. For example, ratings may be skewed one way or another because of various factors such as personal interests, cultural views, geographical locations, etc.

### SUMMARY

There is provided a method of providing application feedback on a client device comprising: determining a group application feedback for an application, the group application feedback generated from feedback submitted by at least one other member of a group in which a device user of the client device is a member; and displaying the group application feedback on the client device.

There is also provided a method of providing application feedback comprising: detecting selection of an option to send a recommendation for an application; enabling selection of at least one contact; incorporating application feedback related to a group associated with at least one selected contact; and sending the recommendation and the application feedback to the at least one selected contact.

There is also provided a computer readable storage medium comprising computer executable instructions for providing application feedback on a client device, the computer executable instructions comprising instructions for: determining a group application feedback for an application, the group application feedback generated from feedback submitted by at least one other member of a group in which a device user of the client device is a member; and displaying the group application feedback on the client device.

There is also provided a computer readable storage medium comprising computer executable instructions for providing application feedback, the computer executable instructions comprising instructions for: detecting selection of an option to send a recommendation for an application; enabling selection of at least one contact; incorporating application feedback related to a group associated with at least one selected contact; and sending the recommendation and the application feedback to the at least one selected contact.

There is also provided an electronic device comprising a processor and memory, the memory comprising computer executable instructions for providing application feedback on a client device by causing the processor to: determine a group application feedback for an application, the group application feedback generated from feedback submitted by at least one other member of a group in which a device user of the client device is a member; and display the group application feedback on the client device.

There is also provided an electronic device comprising a processor and memory, the memory comprising computer executable instructions for providing application feedback by causing the processor to: detect selection of an option to send a recommendation for an application; enabling selection of at least one contact; incorporate application feedback related to a group associated with at least one selected contact; and send the recommendation and the application feedback to the at least one selected contact.

### BRIEF DESCRIPTION OF THE DRAWINGS

Embodiments will now be described by way of example only with reference to the appended drawings wherein:

FIG. 1 is a schematic illustration of an example communication system;

FIG. 2 is a block diagram of an example of a configuration for a client device;

FIG. 3 is a block diagram of an example of a configuration for a social networking system;

FIG. 4 is a schematic illustration of example client data stored in a memory element;

FIG. 5 is a block diagram of an example of a configuration for an application service;

FIG. 6 is a schematic illustration of example application ratings data stored in a memory element;

FIG. 7 is a schematic illustration of an example peer-to-peer communication system;

FIG. 8 is a schematic illustration of an example multi-cast message delivery in a peer-to-peer communication system;

FIG. 9 is a schematic illustration of an example peer-to-peer message;

FIG. 10 is a screen shot of an example group chat user interface;

FIG. 11 is a screen shot of an example group ratings widget;

FIG. 12 is a screen shot of an example application service client application user interface showing a summary view;

FIG. 13 is a screen shot of an example application service client application user interface showing a reviews view;

FIG. 14 is a screen shot of an example contact selector user interface for sending application recommendations;

FIG. 15 is a screen shot of an example instant messaging chat user interface displaying a received application recommendation;

FIG. 16 is a flow chart illustrating example computer executable operations that may be performed in updating application feedback using group data;

FIG. 17 is a flow chart illustrating example computer executable operations that may be performed in displaying group-related application feedback;

FIG. 18 is a flow chart illustrating example computer executable operations that may be performed in sending an application recommendation to a contact; and

FIG. 19 is a block diagram of an example of a configuration for a mobile device.

### DETAILED DESCRIPTION

It will be appreciated that for simplicity and clarity of illustration, where considered appropriate, reference numerals may be repeated among the figures to indicate corresponding or analogous elements. In addition, numerous specific details are set forth in order to provide a thorough understanding of the examples described herein. However, it will be understood by those of ordinary skill in the art that the examples described herein may be practiced without these specific details. In other instances, well-known methods, procedures and components have not been described in detail so as not to obscure the examples described herein. Also, the description is not to be considered as limiting the scope of the examples described herein.

It will be appreciated that the examples and corresponding diagrams used herein are for illustrative purposes only. Different configurations and terminology can be used without departing from the principles expressed herein. For instance, components and modules can be added, deleted, modified, or arranged with differing connections without departing from these principles.

To enhance the selection of applications, an application service can be configured to leverage social networking systems by providing application feedback (e.g., ratings, reviews, recommendations, etc.) that are based on input from contacts, in particular those contacts that are within the same social networking groups as a device user. In this way, the user can base their selection of applications not only on global feedback, but also on how the same application was experienced by one or more of the user's social groups. By sharing group data and application feedback between a social networking system and an application service, the social networking system can be leveraged to both enhance the application selection experience and facilitate the distribution of relevant applications within social groups. This leverage can also be used to enable users interacting with an application service to push recommendations to contacts of the user, and enhance the recommendations by providing group ratings and/or reviews that are relevant to the recipient of the recommendation.

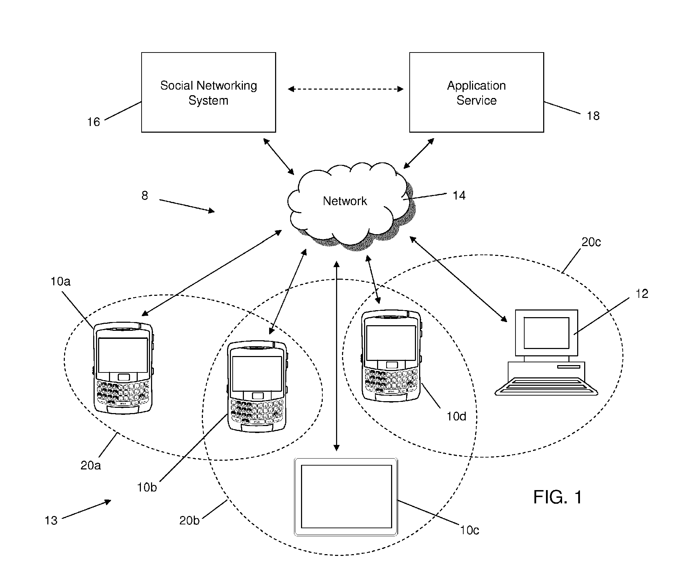

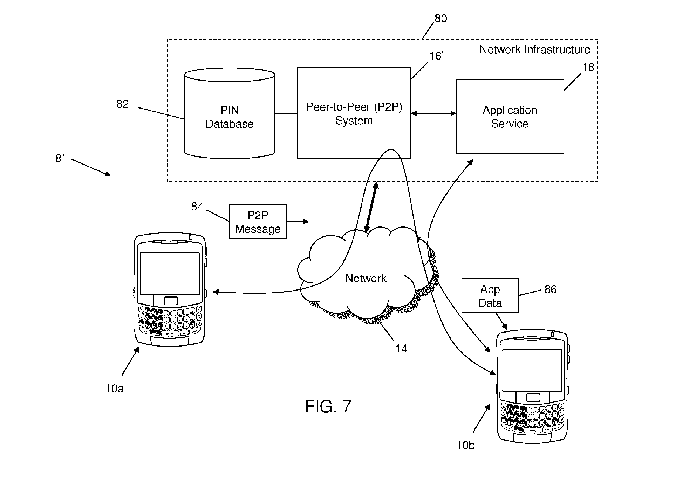

FIG. 1 illustrates an example of a communication system 8 in which various client devices 13 are able to communicate with each other over a network 14. In FIG. 1, first, second, third, and fourth mobile devices 10a, 10b, 10c, and 10d (mobile devices also being referred to generally herein using numeral 10), as well as non-mobile devices such as a desktop computer 12 are representative of example client devices 13. The mobile devices 10 shown in FIG. 1 are illustrative only, and may include, without limitation, smart phones (as illustrated), tablet computers (as illustrated), laptop computers, portable gaming devices, in-vehicle navigation systems, smart home terminals, etc. In the example shown in FIG. 1, access to the network 14 enables the client devices 13 to communicate via a social networking system 16. The client devices 13 in this example are also communicable with an application service 18 via the network 14 for downloading and installing or upgrading applications on the respective devices. The social networking system 16 and application service 18 may communicate with each other either via the network 14 or, in some examples, directly with each other, e.g., when the social networking system 16 and application service 18 are part of the same network infrastructure 80 (as illustrated in FIG. 7).

It can be appreciated that the network 14 shown in FIG. 1 is illustrative only and may represent any one or more interconnected networks, such as various wireless networks (e.g., cellular, WiFi, etc.), local area networks (LANs), wide area networks (WANs), the Internet, etc. For example, the tablet mobile device 10c may access a network access point via a WiFi hotspot, while the mobile device 10a is connected to a wireless cellular network and the desktop computer 12 is connected to the Internet via a LAN.

The social networking system 16 enables the various client devices 13 connected thereto, via the network 14, to form and communicate in groups 20. In the example shown in FIG. 1, the first mobile device 10a and second mobile device 10b belong to a first group 20a, the second mobile device 10b, third mobile device 10c, and fourth mobile device 10d belong to a second group 20b, and the fourth mobile device 10d and desktop computer 12 belong to a third group 20c. Each client device 13 may therefore belong to multiple groups, e.g., the second mobile device 10b (first group 20a and second group 20b) and the fourth mobile device 10d (second group 20b and third group 20c). Different groups 20 may therefore be formed for different reasons, based on various criteria. For example, a user may join a group including co-workers, another group including family members, and yet another group related to a sports team or other organization. Since different groups 20 can be related to different purposes, themes, or common interests, the opinions of members within a group 20, particular related to applications being rated, reviewed, or recommended by other users, can have more meaning to a user in one of those groups 20 than overall or "global" feedback compiled from all users of the application.

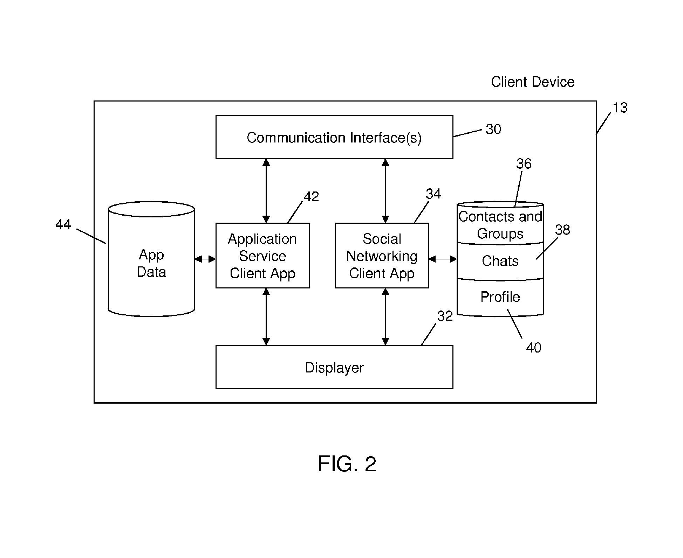

FIG. 2 illustrates an example of a configuration for a client device 13 enabling participation in the communication system 8. The client device 13 in this example includes one or more communication interfaces 30. The communication interface(s) 30 may enable, for example, access to the network 14, as well as the ability to utilize short range communication protocols, etc. The client device 13 has a social networking client application (app) 34 for participating in social networking and social media based communications via the social networking system 16, e.g., instant messaging (IMing). The social networking client application 34 includes or otherwise has access to one or more memory or storage elements for storing contacts and groups 36, copies of conversations or "chats" 38, and profiles 40. The profiles 40 may include various user-selectable and/or definable settings such as availability, status message, picture, sharing options, etc. The client device 13 also includes an application service client application 42 for providing a user interface with the application service 18 to download and/or upgrade applications to be installed or already installed on the client device 13. The application service client application 42 includes or otherwise has access to app data 44 storing details of applications downloaded from the application service 18 and installed on the client device 13.

The contacts and groups 36 may also store feedback related to particular applications, including ratings, reviews, recommendations, etc. By storing such details, the social networking client application 34 may display group-related application feedback in a group-related setting, such as a group chat or other group-related user interface, as will be discussed in greater detail below. It can be appreciated that in such an example, the social networking client application 34 would obtain the group-related application feedback from the social networking system 16, which may be configured to communicate with the application service 18 to obtain the group-related application feedback. In other examples, it can be appreciated that the group-related application feedback may be obtained and stored in the app data 44 and provided to the social networking client application 34 by the application service client application 42. As such, it can be appreciated that the sharing of group data and application feedback, in order to generate group-related application feedback can be done at the server side or the client side.

The social networking client application 34 and application service client application 42 (among other applications, components, and software elements not shown in FIG. 2) may utilize a displayer 32 for rendering user interface elements on a display screen of the client device 13.

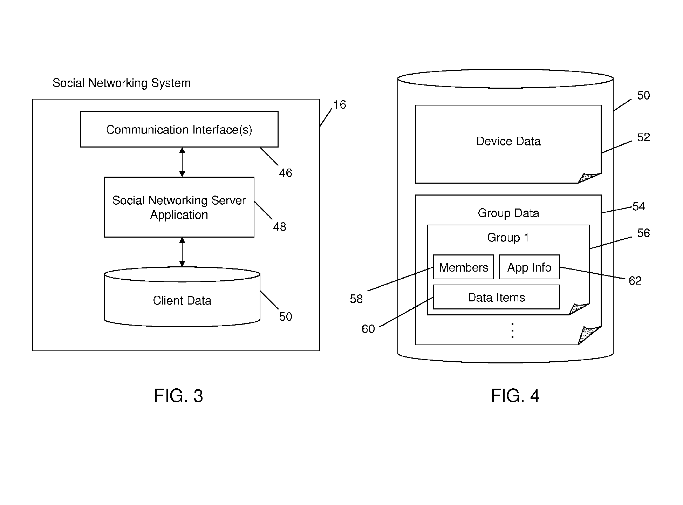

FIG. 3 illustrates an example of a configuration for the social networking system 16. In this example, the social networking system 16 includes, among other things not shown, one or more communication interfaces 46 to enable the social networking system 16 to communicate with or be communicated with by client devices 13, other network infrastructure components, etc. The social networking system 16 also includes a social networking server application 48 complementary to the social networking client application 34 running on the client devices 13. The social networking server application 48 includes or otherwise has access to client data 50 corresponding to respective ones of the client devices 13. For example, the social networking server application 48 may receive and update presence status changes provided by a particular client device 13 such that presence status updates can be distributed or otherwise communicated to other client devices 13 corresponding to contacts 36 of that particular client device 13. The client data 50 also enables the social networking system 16 to store or cache data and information related to the groups 20 formed by the client devices 13, as well as data and information related to applications used by the group members, and obtained from the application service 18.

FIG. 4 illustrates an example of client data 50 that may be stored by the social networking system 16. In the example shown in FIG. 4, the client data 50 includes device data 52, e.g., communication addresses, profile information, presence data, etc.; as well as group data 54. The group data 54 includes a group data entry 56 for each group 20. For example, the group data entry 56 for Group 1 shown in FIG. 4 may be related to the first group 20a shown in FIG. 1. The group data entry 56 includes a membership listing (members) 58, data items 60 related to the group 20 (e.g., shared photos, lists, chats, etc.), and app information (info) 62. The app info 62 specifies or otherwise identifies applications used by particular members 58 of the group 20, and may be used to store or cache ratings, reviews, and recommendations of various client applications associated with the members 58. In the examples described herein, the client applications are provided by the application service 18, however, it can be appreciated that multiple application sources may be used to determine the app info 62 pertaining to a particular group 20.

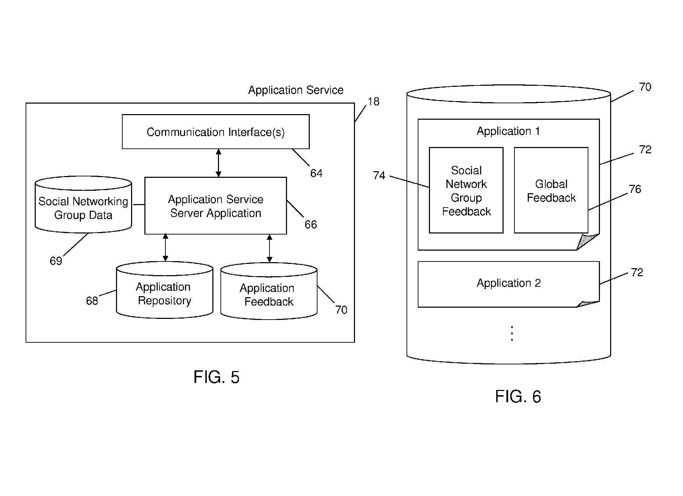

FIG. 5 illustrates an example of a configuration for the application service 18. It can be appreciated that the application service 18 may be provided in various configurations using one or more devices or components, e.g., using a server. In this example, the application service 18 includes, among other things not shown, one or more communication interfaces 64 to enable the application service 18 to communicate with or be communicated with by client devices 13, other network infrastructure components, etc. The application service 18 also includes an application service server application 66 complementary to the application service client application 42 running on the client devices 13. The application service server application 66 includes or otherwise has access to an application repository 68 containing copies of applications and upgrades to applications that may be accessed by and provided to client devices 13, e.g., by enabling a client device 13 to download the application by connecting to the application service server application 66. The application service server application 66 also includes or otherwise has access to application ratings, reviews, recommendations, and any other data related to feedback concerning the applications in the application repository 68, referred to as "application feedback 70" in FIG. 5.

In order to provide tailored or filtered application feedback 70 that is relevant to groups 20 formed in association with the social networking system 16, the application service server application 66 includes or otherwise has access to social networking group data 69, which may be stored, updated, cached, deleted, and modified, to provide up-to-date group and group membership information for determining such tailored application feedback 70. Similar to the app info 62 stored by the social networking system 16, the social networking group data 69 may be obtained and maintained by having the application service 18 and social networking system 16 communicate with each other. It can be appreciated that the application service 18 and social networking system 16 may communicate with each other to match client devices 13 to identities known to the respective systems by sharing identifiers (e.g., personal identification numbers (PINs), etc.) that are unique to each client device 13.

FIG. 6 illustrates an example of the application feedback 70. In the example shown in FIG. 6, an application entry 72 is stored for each application in the application repository 68 (or created once feedback 70 is obtained for an application in the application repository 68). Each application entry 72 includes social network group feedback 74 (if available), as well as global feedback 76. The social network group feedback 74 includes ratings, reviews, and recommendations related to specific groups 20 within the social networking system 16, and typically includes a subset of the global feedback 76, tailored to the group 20. For example, global feedback 76 for a particular application may provide a rating of 3 out of 5 stars, whereas selecting the ratings given by members of a particular group 20 may generate a group rating that is higher, lower, or the same as the global feedback 76 for that application.

In order to generate social network group feedback 74, the application service 18 maintains the social network group data 69 and uses group membership (e.g., using members 58 in the group data 54) to determine if any social network group feedback 74 can be generated for any given application. The social networking group data 69 may include a unique identifier for each group 20 that is known to the social networking system 16 such that social network group feedback 74 can be requested by or pushed to the social networking system 16. By providing the social networking system 16 with the social network group feedback 74 for particular applications, the social networking system 16 can update the app info 62 in the group data 54 stored by the social networking system 16 to enable such app info 62, including group feedback 74, to be used within the social networking system 16, as explained in greater detail below.

As discussed above, the social networking system 16 may provide various services. The social networking system 16 and application service 18 may also be part of the same network infrastructure 80, as shown in FIG. 7. In the example illustrated in FIGS. 7 to 9, the social networking system 16 is described as a peer-to-peer (P2P) system 16', which may include messaging features (e.g., for IMing), group features (e.g., for forming groups 20), presence features, data sharing, status updates, etc.

An example of a P2P-based communication system 8' including a network infrastructure 20 common to both the P2P system 16' and application service 18, is shown in FIG. 7. The communication system 8' enables, for example, the first and second mobile devices 10a, 10b to communicate over the P2P system 16 via the network 14. In the example shown in FIG. 7, the first and second devices 10a, 10b are illustrated as being mobile devices 10 such as smart phones. However, it can be appreciated that other types of electronic client devices 13 configured to conduct P2P messaging may also be capable of communicating with or within the communication system 8'. It will also be appreciated that although the examples shown herein are directed to mobile client devices 13, the same principles may apply to other client devices 13 capable of communicating with the P2P system 16'. For example, an application (not shown) hosted by a desktop computer 12 or other "non-portable" or "non-mobile" client device 13 may also be capable of communicating with other client devices 13 (e.g., including first and second devices 10a, 10b) using the P2P system 16'.

The application service 18 in the example shown in FIG. 7 is capable of communicating directly with the P2P system 16' by being included in or otherwise associated with the same network infrastructure 80, which may also be administered by a single entity.

The P2P system 16' is, in this example, a component of the network infrastructure 80 associated with the network 14. The network infrastructure 80 in this example includes, in addition to the P2P system 16', and among other things not shown for simplicity, a personal identification number (PIN) database 82. The PIN database 82 in this example is used to store one or more PINs associated with particular client devices 13, whether they are subscribers to a service provided by the network infrastructure 80 or otherwise. To illustrate operation of the P2P system 16' with respect to FIGS. 7 to 9, the first and second devices 10a, 10b will be commonly referred to commonly as "mobile devices 10".

One of the mobile devices 10 may communicate with the other of the mobile devices 10 and vice versa via the P2P system 16', in order to perform P2P messaging or to otherwise exchange P2P-based communications. For ease of explanation, in the following examples, any P2P-based communication may also be referred to as a P2P message 84 as shown in FIG. 7. As also shown in FIG. 7 the mobile devices 10 may also access the application service 18 within the network infrastructure 80 to download or upgrade applications by obtaining app data 86 via the network 14.

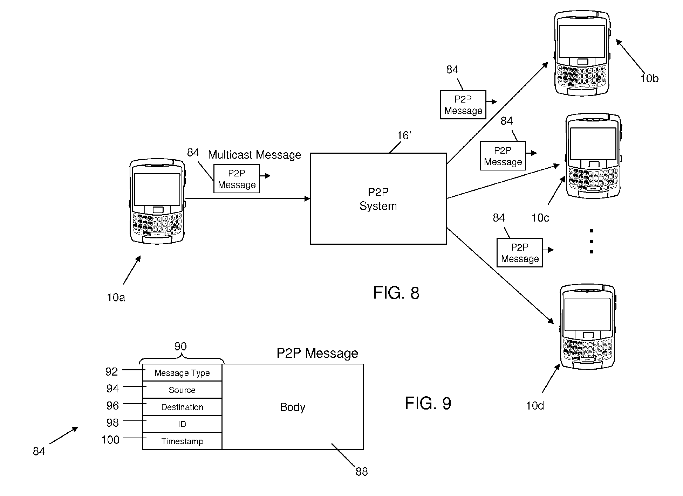

In some examples, the P2P system 16' may be capable of sending multi-cast messages, i.e. forwarding a single message from a sender to multiple recipients without requiring multiple P2P messages 84 to be generated by such sender. For example, as shown in FIG. 8, the P2P system 16' can be operable to enable a single P2P message 84 to be sent by the first mobile device 10a to multiple recipient mobile devices 10, e.g. the second, third and further mobile devices 10b, 10c, and 10d, by addressing the P2P message 84 to multiple corresponding P2P addresses, and having the P2P system 16' multicast the P2P message 84 to those recipient mobile devices 10b, 10c, and 10d.

An example P2P message 84 is shown in greater detail in FIG. 9, and has a format that is particularly suitable for a PIN-to-PIN based system. In a typical P2P protocol, each P2P message 84 has associated therewith a source corresponding to the mobile device 10 which has sent the P2P message 84 and includes a destination identifying the one or more intended recipients. Each P2P message 84 in this example includes a body 88, which contains the content for the P2P message 84 (e.g., text or other data), and a header 90, which contains various fields used for transmitting and processing each P2P message 84. In this example, the header 90 includes a message type field 92 to specify the type of transmission (e.g., chat, registration, block, presence, sharing session etc.), a source field 94 to specify the device address for the sender, a destination field 96 to specify the device address(es) for the one or more intended recipients, an ID field 98 to identify the corresponding P2P client application (e.g., see social networking client application 34 in FIG. 2) and a timestamp field 100 to indicate the time (and if desired, the date) at which the P2P message 84 was sent by the designated sender.

It can be appreciated that in this example, the ID field 98 can be used to specify the application ID to identify a P2P application on the mobile device 10. Where the P2P application relates to, for example, an instant messaging (IM) system, the message type field 92 can also be used to designate an IM communication, and the ID field 98 may then correspond to a conversation ID, i.e. a conversation thread the P2P message 84 corresponds to (e.g., such that each P2P message 84 is identified by the conversation in which it was sent).

It will be appreciated that other information or attributes may be included in the P2P message 84, such as a subject field (not shown) to enable a subject for part or all of a conversation (in an IM embodiment) to be transported with the P2P message 84 (e.g., to create new subjects, modify subjects, notify others of subjects, etc.), or application details field (not shown) to provide application-specific information such as the version and capabilities of the application.

The P2P system 16' can utilize any suitable P2P protocol operated by, for example, a P2P router (not shown), which may be part of the network infrastructure 80. It can be appreciated however that a stand-alone P2P configuration (i.e. that does not rely on the network infrastructure 80 - not shown) may equally apply the principles herein. The P2P system 16' may also enable mobile devices 10 to communicate with desktop computers thus facilitating, for example, communications such as IMing between mobile applications and desktop applications on the desktop computer.

The P2P system 16' can be implemented using a router-based communication infrastructure, such as one that provides email, Short Message Service (SMS), voice, Internet and other communications. Particularly suitable for hosting a P2P messaging router, is a wireless router or server used in systems such as those that provide push-based communication services. In FIG. 7, the network infrastructure 80 facilitates P2P communications such as instant messaging between mobile devices 10. P2P messaging, such as IMing, is provided by an associated application stored on each mobile device 10, e.g., an IM application, which can be initiated, for example, by highlighting and selecting an icon from a display as is well known in the art. The P2P system 16' routes messages between the mobile devices 10 according to the P2P protocol being used. For example, the P2P protocol may define a particular way in which to conduct IM or other types of messaging.

In general, in a P2P protocol, the sender of the P2P message 84 knows the source address of the intended recipient, e.g., a PIN. Knowledge of the source address may be established when the two devices request to add each other to their respective contact or buddy lists. A particular mobile device 10 can communicate directly with various other mobile devices 10 through the P2P system 16' without requiring a dedicated server for facilitating communications. In other words, the P2P system 16' enables the mobile devices 10 to communicate with each other directly over the network infrastructure 80 in accordance with the P2P protocol.

When conducting a P2P session according to the example shown in FIG. 7, the mobile devices 10 can communicate directly with the network infrastructure 80 in a client based exchange where, as noted above, an intermediate server is not required. A P2P message 84 sent by one mobile device 10 is received by the network infrastructure 80, which obtains the source address for the intended recipient (or recipients) from information associated with the P2P message 84 (e.g., a data log) or from the P2P message 84 itself. Upon obtaining the recipient's address according to the P2P protocol, the network infrastructure 80 then routes the P2P message 84 to the recipient associated with the mobile device 10 having such address (or recipients having respective addresses). The network infrastructure 80 typically also provides a delivery confirmation to the original sender, which may or may not be displayed to the user. The destination device can also provide such delivery information. The network infrastructure 80 may be capable of routing P2P messages 84 reliably as well as being capable of holding onto the P2P messages 84 until they are successfully delivered. Alternatively, if delivery cannot be made after a certain timeout period, the network infrastructure 80 may provide a response indicating a failed delivery. The network infrastructure 80 may choose to expire or delete a P2P message 84 if a certain waiting period lapses.

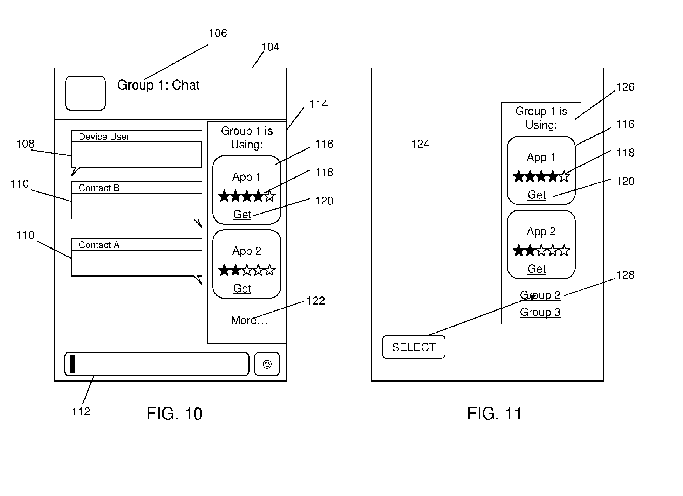

Turning now to FIG. 10, shown therein is a screen shot of a group chat user interface 104. The group chat user interface 104 includes a group identifier 106, an outgoing chat message 108 sent by a user of the client device 13 displaying the group chat user interface 104 ("Device User" hereinafter), and incoming chat messages 110 received from other client devices 13 (e.g., Contact A and Contact B in the example shown). The group chat user interface 104 also includes a message composition portion 112 for entering text to compose outgoing chat messages 108. In order to leverage the potential relevance of the opinions and views of the other members in a group 20 (e.g., Group 1), the social networking system 16 can provide app info 62 related to groups 20 relevant to the social networking client application 34 on a particular client device 13. The app info 62, as discussed above, can be generated using information obtained by the social networking system 16 from the application service 18, or can be provided by the application service 18 based on information provided by the social networking system 16 to the application service 18.

In FIG. 10, the group chat user interface 104 incorporates an application rating portion 114, which includes application information 116 for particular applications used by the Group 1 members. The application information 116 includes an application rating 118, and a get link 120 for obtaining or "getting" the application, e.g., by initiating the application service client application 42 to download the application. A more link 122 may also be provided if application information 116 for more applications than can be displayed in a single screen are available to be viewed. The application information 116 therefore provides the Device User with potentially contextually relevant information to facilitate the acquisition of relevant applications. Similarly, based on the application information 116, the Device User can avoid obtaining applications that appear to be disliked by other group members, particularly if the application information 116 relates to an application relevant to the nature of the group 20. For example, a positive review of a sports-themed application may be of particular interest to a sports-related group 20. Since the group chat user interface 104 is specific to a particular group, the application rating portion 114 is configured to display application information 116 specific to that group 20.

The application information 116 can also be displayed in any user interface on a client device 13, as illustrated in FIG. 11. FIG. 11 provides a screen shot of a generic user interface screen 124 including a group ratings widget 126. The group ratings widget 126 can be displayed on its own as shown in FIG. 11, or may be embedded or "docked" in other user interfaces. Similarly, the group ratings widget 126 may also be expandable to fill the entire screen. Since the group ratings widget 126 in FIG. 11 is shown in a user interface that is not related to a particular group 20, the group ratings widget 126 may include application information 116 for multiple groups 20. As shown in FIG. 11, group links 128 may be included to allow the user to drill down into application ratings 118 for applications rated by specific groups 20.

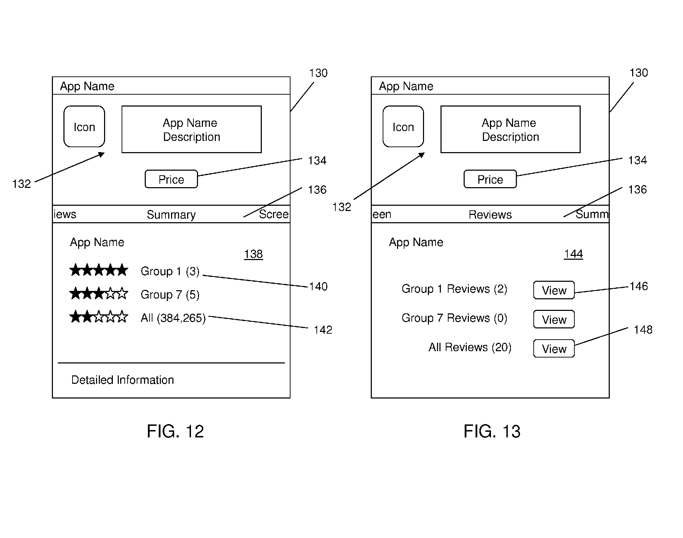

By obtaining social networking group data 69 from the social networking system 16, and generating social network group feedback 74 specific to various applications, the application service 18 can leverage group membership information to provide potentially more relevant application feedback 70 to users of the application service 18. FIG. 12 illustrates a screen shot of an application service client application user interface 130 showing a summary view 138. The user interface 130 may be provided by initiating the application service client application 42 to access an application "portal" provided by the application service server application 66. The user interface 130 in this example provides information related to a specific application available from the application service 18, and displays application details 132 such as an icon, name, and description. The user interface 130 may also provide a price button 134 indicating the monetary cost of downloading the application. It can be appreciated that if the particular application being displayed is free, the price button 134 may be replaced with another button for initiating a free download of the application. It can be appreciated that if the client device 13 has already downloaded and installed the application being viewed in the user interface 130, other options may be presented, such as an upgrade option or launch option. The user interface 130 also includes a carousel bar 136 that may be interacted with to turn or flip between various views.

A summary view 138 is shown in FIG. 12, which includes both group ratings 140 and a global rating 142 for the application. The group ratings 140 can include any ratings associated with groups to which the Device User is a member, and can be compared with the global ratings 142 to provide additional context when deciding whether or not to download the application being viewed in the user interface 130.

By swiping or scrolling to the right, in this example, a reviews view 144 may be displayed by the user interface 130 as shown in FIG. 13. It can be seen that in addition to providing group-specific ratings 140, the user interface 130 can also be used by the application service 18 to provide other application feedback 70 that is group-specific, such as reviews submitted by members of groups 20 to which the Device User belongs. The reviews view 144 may include group view buttons 146 for the group-specific reviews, and a global view button 148 to browse all reviews of the application. The number of reviews for each group 20 and globally can also be provided, as shown in FIG. 13. By providing application feedback 70 that is group specific, the application selection experience can be enhanced by showing how the user's various groups 20, which may have particular interests, have rated or reviewed a particular application.

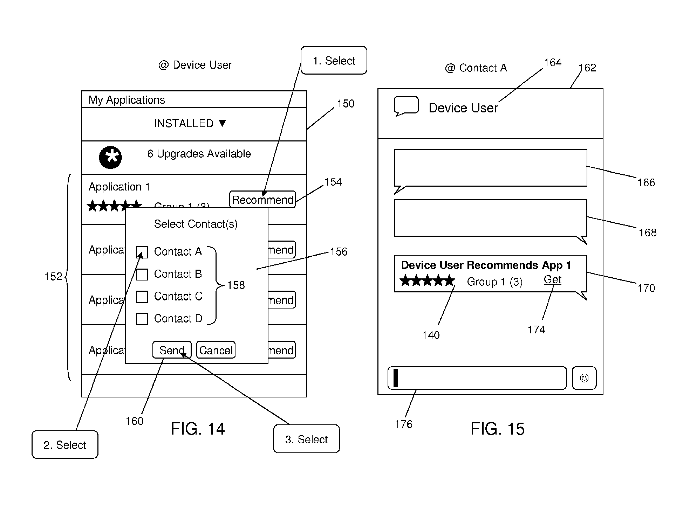

In addition to generating group specific ratings and reviews, the application service 18 can also enable a user to push recommendations for applications to his/her contacts. FIG. 14 illustrates a screen shot of a My Applications user interface 150 that may be displayed by the application service client application 42 to list the applications downloaded and installed on the client device. The user interface 150 includes, among other things, a list 152 of applications installed on the client device 13. Each entry in the list 152 may be adapted to include group ratings (as shown) and reviews (not shown), as well as a recommend button 154. The recommend button 154 enables the Device User to push a recommendation to one or more contacts, for an application that the Device User has obtained, installed, and used on the client device 13. It can be appreciated that the recommend button 154 or a similar feature may also be provided in other user interfaces provided by the application service 18, e.g., the user interface 130 shown in FIGS. 12 and 13 when the application has already been downloaded and installed. By selecting the recommend button 154 as shown in FIG. 14, a contact selector user interface 156 may be displayed to enable selections to be made from a list of contacts 158. By selecting Contact A as shown in FIG. 14, and selecting a displayed send button 160, an application recommendation may be sent to Contact A as shown in FIG. 15. It can be appreciated that by selecting additional contacts, the recommendation may also be sent to such additional contacts at the same time.

FIG. 15 illustrates a screen shot of an instant messaging chat user interface 162 displaying a conversation between the Device User and Contact A, as seen by Contact A. In the example shown in FIG. 15, in addition to outgoing messages 166 and incoming messages 168, a received application recommendation message 170 may be displayed. The recommendation message 170 is included in the conversation to provide a personalized recommendation venue for pushing application recommendations. It can be appreciated that privacy options may be provided by the social networking client application 34 to enable a user to block recommendations from some contacts, e.g., those not of a particular type such as specified groups 20. The recommendation message 170 includes a group rating 140 relevant to Contact A, which it can be assumed for sake of illustration, is in Group 1. The recommendation message 170 may also include a get link 174 to enable Contact A to initiate the acquisition of the application being recommended. By enabling recommendations to be pushed to Contact A, and assuming Contact A has not blocked such recommendations, applications that are likely to be favored by particular contacts can be more easily propagated throughout a social network. By leveraging the social networking system 16, the application service 18 can utilize a familiar, trusted, and personal user interface to enable recommendations to be shared. Moreover, by integrating application feedback 70 into the recommendations, additional relevance can be added to the recommendation. For example, in addition to observing that Device User recommends App 1, Contact A may gain further context from the Group 1 rating, which is also very favorable.

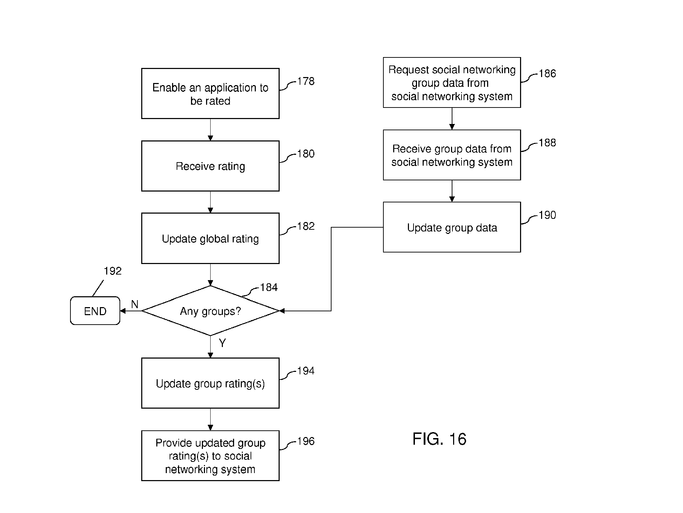

FIG. 16 provides a flow chart illustrating example computer executable operations that may be performed in updating application feedback 70 using social networking group data 69. At 178, the application service server application 66 enables, e.g., via the application service client application 42, an application to be rated. At 180, a rating is received and a global rating for the application is updated, at 182. The application service server application 66 determines, at 184, if the user that submitted the rating is associated with any social networking groups 20. In order to have up-to-date social networking group data 69, the application service server application 66 may request social networking group data 69 from the social networking system 16, at 186, receive data and/or information (e.g., deltas, updates, fresh data, etc.), at 188, from the social networking system 16, and update the social networking group data 69, at 190. If the user submitting the rating is not associated with any groups 20, at 184, the process ends, at 192. If the user submitting the ratings, at 184, is associated with at least one group 20 in the social networking system 16, the at least one group rating is updated, at 194, and, if pushed to the social networking system 16, the updated group ratings may be sent to the social networking system 16, at 196.

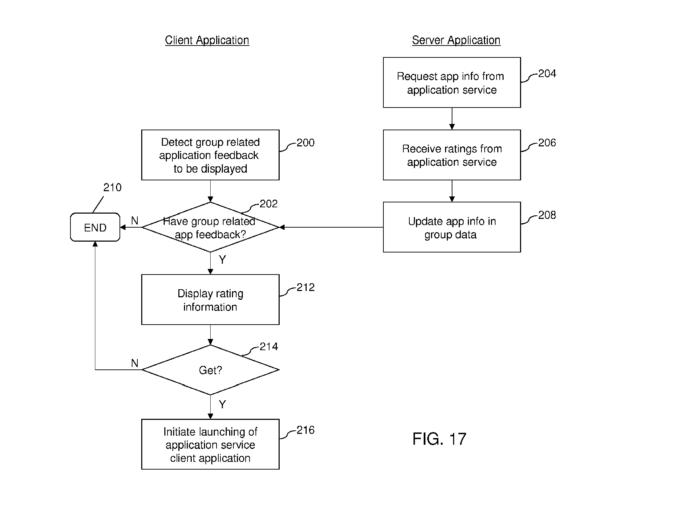

FIG. 17 provides a flow chart illustrating example computer executable operations that may be performed in providing application feedback 70 on a client device 13. At 200, the social networking client application 34 detects that group related applications feedback is to be displayed, e.g., for the user interface 104, widget 126, etc. The social networking client application 34 determines, at 202, if it has access to group related application feedback 70, e.g. ratings, reviews, etc. If no group related application feedback 70 is available, e.g., if the group associated with a group chat user interface 104 has not rated any applications, the process ends, at 210. The group related application feedback 70 may be accessed by receiving app info 62 from the social networking server application 48. The social networking server application 48 may request the app info 62 from the application service 18, at 204, e.g., on a periodic basis and receive the app info 62 from the application service 18, at 206. It can be appreciated that the application service 18 may instead push the app info 62 to the social networking system 18 periodically or upon receiving updates, and thus operation 204 may be optional.

The app info 62 is updated in the group data 54, at 208, in order to provide up-to-date app info 62 for the social networking client application 34 to reference, at 202. If group related application feedback 70 is available for at least one relevant group 20, at 202, the application feedback 70 can be provided. For example, as shown in FIG. 17, the rating information 118 for an application may be , at 212. The social networking client application 34 or widget 126 may then determine, at 214, whether or not the get link 120 has been selected. If not, the process ends, at 210. If the get link 120 has been selected, the launching of the application service client application is initiated at 216.

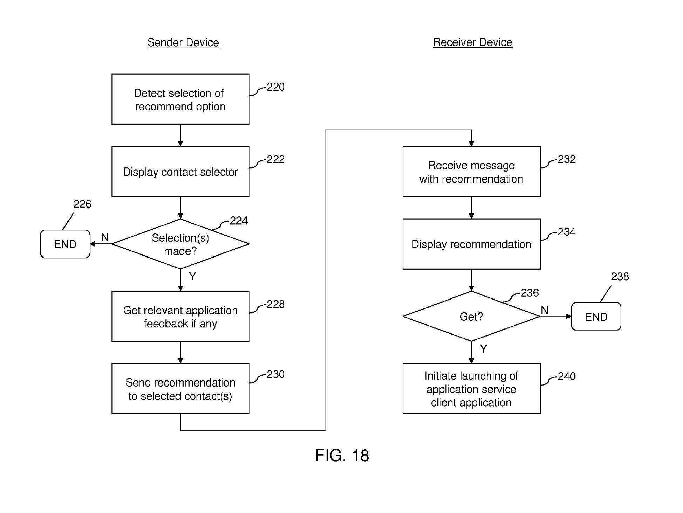

FIG. 18 provides a flow chart illustrating example computer executable operations that may be performed in sending an application recommendation to a contact. At 220, the application service client application 42 at the sender device (e.g., Device User) detects or enables detection of selection of the recommend button 154. After detecting selection of the recommend button 154, the contact selector user interface 156 is displayed, at 222, as shown in FIG. 14. The application service client application 42 determines, at 224, whether or not any selections have been made using the contact selector user interface 156. If not, the process ends, at 226. If at least one selection has been made, at 224, the application service client application 42 gets any relevant application feedback 70 (if available), at 228. For example, if the sender device has access to group specific ratings, and the receiver device is in a group having such a group specific rating, the rating information may be included in the recommendation sent to the selected contact or contacts, at 230. The recommendation may be sent using the social networking client application 34, e.g., by sending a P2P message 84. The receiver device receives the recommendation message 170, at 232, and displays the recommendation message 170, at 234. The social networking client application 34 at the receiver device determines, at 236, whether or not the receiver has detected selection of the get link 174. If not, the process ends, at 238, e.g., the contact may continue to message. If the get link 174 is selected, at 236, the social networking client application 34 may initiate launching of the application service client application 42, at 240, to enable the contact to download the recommended application.

By using the social networking client application 34 to deliver the recommendation as illustrated in FIG. 18, not only can the contact receive the recommendation in a familiar and trusted environment, but the contact may also immediately begin messaging the sender of the recommendation, e.g., to ask specific questions about the recommendation.

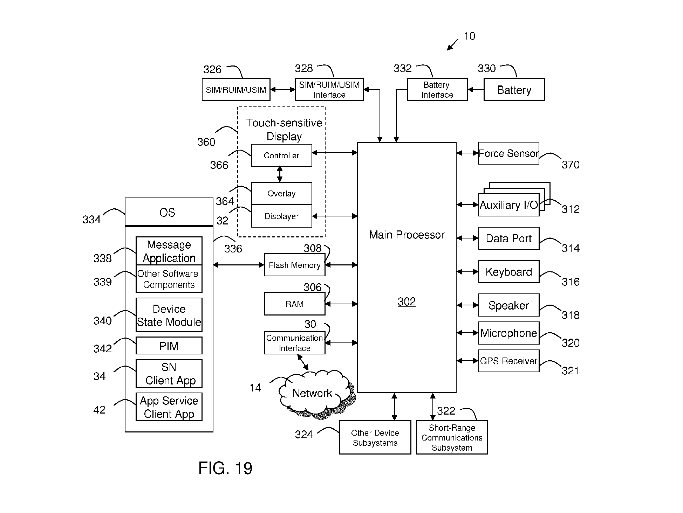

Referring to FIG. 19, to further aid in the understanding of the example mobile devices 10 described above, shown therein is a block diagram of an example configuration of a mobile device 10. The mobile device 10 includes a number of components such as a main processor 302 that controls the overall operation of the mobile device 10. Communication functions, including data and voice communications, are performed through a communication interface 30. The communication interface 30 receives messages from and sends messages to a network 14. In this example of the mobile device 10, the communication interface 30 is configured in accordance with the Global System for Mobile Communication (GSM) and General Packet Radio Services (GPRS) standards, which is used worldwide. Other communication configurations that are equally applicable are the 3G and 4G networks such as Enhanced Data-rates for Global Evolution (EDGE), Universal Mobile Telecommunications System (UMTS) and High-Speed Downlink Packet Access (HSDPA), Long Term Evolution (LTE), Worldwide Interoperability for Microwave Access (Wi-Max), etc. New standards are still being defined, but it is believed that they will have similarities to the network behavior described herein, and it will also be understood by persons skilled in the art that the examples described herein are intended to use any other suitable standards that are developed in the future. The wireless link connecting the communication interface 30 with the network 14 represents one or more different Radio Frequency (RF) channels, operating according to defined protocols specified for GSM/GPRS communications.

The main processor 302 also interacts with additional subsystems such as a Random Access Memory (RAM) 306, a flash memory 308, a touch-sensitive display 360, an auxiliary input/output (I/O) subsystem 312, a data port 314, a keyboard 316 (physical, virtual, or both), a speaker 318, a microphone 320, a GPS receiver 321, short-range communications subsystem 322, and other device subsystems 324. Some of the subsystems of the mobile device 10 perform communication-related functions, whereas other subsystems may provide "resident" or on-device functions. By way of example, the displayer 32 and the keyboard 316 may be used for both communication-related functions, such as entering a text message for transmission over the network 14, and device-resident functions such as a calculator or task list. In one example, the mobile device 10 can include a non touch-sensitive display in place of, or in addition to the touch-sensitive display 360. For example the touch-sensitive display 360 can be replaced by a displayer 32 that may not have touch-sensitive capabilities.

The mobile device 10 can send and receive communication signals over the network 14 after required network registration or activation procedures have been completed. Network access is associated with a subscriber or user of the mobile device 10. To identify a subscriber, the mobile device 10 may use a subscriber module component or "smart card" 326, such as a Subscriber Identity Module (SIM), a Removable User Identity Module (RUIM) and a Universal Subscriber Identity Module (USIM). In the example shown, a SIM/RUIM/USIM 326 is to be inserted into a SIM/RUIM/USIM interface 328 in order to communicate with a network.

The mobile device 10 is typically a battery-powered device and includes a battery interface 332 for receiving one or more rechargeable batteries 330. In at least some examples, the battery 330 can be a smart battery with an embedded microprocessor. The battery interface 332 is coupled to a regulator (not shown), which assists the battery 330 in providing power to the mobile device 10. Although current technology makes use of a battery, future technologies such as micro fuel cells may provide the power to the mobile device 10.

The mobile device 10 also includes an operating system 334 and software components 336 to 342, 34, and 42. The operating system 334 and the software components 336 to 342, 34, and 42, that are executed by the main processor 302 are typically stored in a persistent store such as the flash memory 308, which may alternatively be a read-only memory (ROM) or similar storage element (not shown). Those skilled in the art will appreciate that portions of the operating system 334 and the software components 336 to 342, 34, and 42, such as specific device applications, or parts thereof, may be temporarily loaded into a volatile store such as the RAM 306. Other software components can also be included, as is well known to those skilled in the art.

The subset of software applications 336 that control basic device operations, including data and voice communication applications, may be installed on the mobile device 10 during its manufacture. Software applications may include a message application 338, a device state module 340, a Personal Information Manager (PIM) 342, a social networking (SN) client app 34, and a application service client app 42. A message application 338 can be any suitable software program that allows a user of the mobile device 10 to send and receive electronic messages, wherein messages are typically stored in the flash memory 308 of the mobile device 10. A device state module 340 provides persistence, i.e. the device state module 340 ensures that important device data is stored in persistent memory, such as the flash memory 308, so that the data is not lost when the mobile device 10 is turned off or loses power. A PIM 342 includes functionality for organizing and managing data items of interest to the user, such as, but not limited to, e-mail, contacts, calendar events, and voice mails, and may interact with the network 14.

Other types of software applications or components 339 can also be installed on the mobile device 10. These software applications 339 can be pre-installed applications (i.e. other than message application 338) or third party applications, which are added after the manufacture of the mobile device 10. Examples of third party applications include games, calculators, utilities, etc.

The additional applications 339 can be loaded onto the mobile device 10 through at least one of the network 14, the auxiliary I/O subsystem 312, the data port 314, the short-range communications subsystem 322, or any other suitable device subsystem 324.

The data port 314 can be any suitable port that enables data communication between the mobile device 10 and another computing device. The data port 314 can be a serial or a parallel port. In some instances, the data port 314 can be a Universal Serial Bus (USB) port that includes data lines for data transfer and a supply line that can provide a charging current to charge the battery 330 of the mobile device 10.

For voice communications, received signals are output to the speaker 318, and signals for transmission are generated by the microphone 320. Although voice or audio signal output is accomplished primarily through the speaker 318, the displayer 32 can also be used to provide additional information such as the identity of a calling party, duration of a voice call, or other voice call related information.

The touch-sensitive display 360 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. In the presently described example, the touch-sensitive display 360 is a capacitive touch-sensitive display which includes a capacitive touch-sensitive overlay 364. The overlay 364 may be an assembly of multiple layers in a stack which may include, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

The displayer 32 of the touch-sensitive display 360 may include a display area in which information may be displayed, and a non-display area extending around the periphery of the display area. Information is not displayed in the non-display area, which is utilized to accommodate, for example, one or more of electronic traces or electrical connections, adhesives or other sealants, and protective coatings, around the edges of the display area.

One or more touches, also known as touch contacts or touch events, may be detected by the touch-sensitive display 360. The processor 302 may determine attributes of the touch, including a location of a touch. Touch location data may include an area of contact or a single point of contact, such as a point at or near a center of the area of contact, known as the centroid. A signal is provided to the controller 366 in response to detection of a touch. A touch may be detected from any suitable object, such as a finger, thumb, appendage, or other items, for example, a stylus, pen, or other pointer, depending on the nature of the touch-sensitive display 360. The location of the touch moves as the detected object moves during a touch. One or both of the controller 366 and the processor 302 may detect a touch by any suitable contact member on the touch-sensitive display 360. Similarly, multiple simultaneous touches, are detected.

In some examples, an optional force sensor 370 or force sensors is disposed in any suitable location, for example, between the touch-sensitive display 360 and a back of the mobile device 10 to detect a force imparted by a touch on the touch-sensitive display 360. The force sensor 370 may be a force-sensitive resistor, strain gauge, piezoelectric or piezoresistive device, pressure sensor, or other suitable device.

It will be appreciated that any module or component exemplified herein that executes instructions may include or otherwise have access to computer readable media such as storage media, computer storage media, or data storage devices (removable and/or non-removable) such as, for example, magnetic disks, optical disks, or tape. Computer storage media may include volatile and non-volatile, removable and non-removable media implemented in any method or technology for storage of information, such as computer readable instructions, data structures, program modules, or other data. Examples of computer storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by an application, module, or both. Any such computer storage media may be part of the client devices 13, social networking system 16, application service 18, any component of or related to the client devices 13, social networking system 16, or application service 18, etc., or accessible or connectable thereto. Any application or module herein described may be implemented using computer readable/executable instructions that may be stored or otherwise held by such computer readable media.

The steps or operations in the flow charts and diagrams described herein are just for example. There may be many variations to these steps or operations without departing from the principles discussed above. For instance, the steps may be performed in a differing order, or steps may be added, deleted, or modified.

Although the above principles have been described with reference to certain specific examples, various modifications thereof will be apparent to those skilled in the art as outlined in the appended claims.

## Claims

1. A method of providing application feedback on a client device comprising:
determining a group application feedback for an application, the group application feedback generated from feedback submitted by at least one other member of a group in which a device user of the client device is a member; and
displaying the group application feedback on the client device.

2. The method of claim 1, the group application feedback being displayed by an application service application providing an option to obtain the application associated with the group application feedback.

3. The method of claim 1 or claim 2, the group application being displayed by a user interface providing an option to obtain the application associated with the group application feedback by initiating an application service application.

4. The method of claim 3, the user interface being displayed by a social networking application.

5. The method of claim 4, the social networking application comprising instant messaging.

6. The method of claim 3, the user interface being displayed using a widget.

7. The method of any one of claims 1 to 6, further comprising displaying a global application feedback in association with the group application feedback.

8. The method of any one of claims 1 to 7, the group application feedback including at least one of a group application rating and one or more group application reviews.

9. A method of providing application feedback comprising:
detecting selection of an option to send a recommendation for an application;
enabling selection of at least one contact;
incorporating application feedback related to a group associated with at least one selected contact; and
sending the recommendation and the application feedback to the at least one selected contact.

10. The method of claim 9, the recommendation being sent by a social networking application using a message.

11. The method of claim 9 or claim 10, the option being displayed by an application service application.

12. The method of any one of claims 9 to 11, the application feedback including at least one of an application rating and one or more application reviews.

13. A computer readable storage medium comprising computer executable instructions for performing the method according to any one of claims 1 to 12.

14. An electronic device comprising a processor and memory, the memory comprising computer executable instructions for performing the method according to any one of claims 1 to 12.

## Amended claims

### Amended claims in accordance with Rule 137(2) EPC.

**1.** A method of providing application feedback (74) on a client device (13) comprising:
determining a group application feedback (74) for an application (72) capable of being obtained by the client device (13) from an application service (18), the group application feedback (74) having been generated by the application service (18) from individual feedback submitted to the application service (18) by at least one other member of a group (20) for a group application (34) in which a device user of the client device (13) is a member, the application service (18) having obtained group membership data (58) from a system (16) associated with the group application (34); and
displaying the group application feedback (74) on the client device (13).

**2.** The method of claim 1, the group application feedback (74) being displayed by an application service application (42) corresponding to the application service (18), the application service application (42) providing an option (120) to obtain the application (72) associated with the group application feedback (74).

**3.** The method of claim 1 or claim 2, the group application (34) being displayed by a user interface (114, 126) providing an option (120) to obtain the application (72) associated with the group application feedback (74) by initiating an application service application (42).

**4.** The method of claim 3, the user interface (114, 126) being displayed by a social networking application (34).

**5.** The method of claim 4, the social networking application comprising instant messaging.

**6.** The method of claim 3, the user interface (126) being displayed using a widget.

**7.** The method of any one of claims 1 to 6, further comprising displaying a global application feedback (76) in association with the group application feedback (74).

**8.** The method of any one of claims 1 to 7, the group application feedback (74) including at least one of a group application rating and one or more group application reviews.

**9.** The method of any one of claims 1 to 8, further comprising:
detecting selection of an option (154) to send a recommendation for an application;
enabling selection of at least one contact (158);
incorporating application feedback related (70) to a group (20) associated with at least one selected contact (158); and
sending the recommendation and the application feedback (70) to the at least one selected contact (158).

**10.** The method of claim 9, the recommendation being sent by a social networking application (34) using a message (84).

**11.** The method of claim 9 or claim 10, the option (154) being displayed by an application service application (42).

**12.** The method of any one of claims 9 to 11, the application feedback (70) including at least one of an application rating and one or more application reviews.

**13.** A computer readable storage medium comprising computer executable instructions for performing the method according to any one of claims 1 to 12.

**14.** An electronic device (13) comprising a processor (302) and memory (308, 336), the memory (308, 336) comprising computer executable instructions for performing the method according to any one of claims 1 to 12.
